# EUROPEAN PATENT SPECIFICATION

(11) **EP 2 482 149 B1**
(45) Date of publication and mention of the grant of the patent: **03.03.2021**
(21) Application number: 12000486.6
(22) Date of filing: 25.01.2012
(51) Int. Cl.: G05B 19/042, G05B 9/03, G06F 11/07

(54) **Electronic control unit**
Elektronische Steuereinheit
Unité de commande électrique

(30) Priority: 01.02.2011 JP 2011019405
(43) Date of publication of application: 01.08.2012
(73) Proprietor: Keihin Corporation, Tokyo 163-0539 (JP)
(72) Inventor: Kikegawa, Yu, Tochigi, 3291233 (JP); Aoyagi, Tadashi, Tochigi, 3291233 (JP); Watanabe, Hideki, Tochigi, 3291233 (JP); Akimoto, Yutaka, Tochigi, 3291233 (JP)
(74) Representative: Hertz, Oliver

(56) References cited:
- EP-A2- 0 322 141
- US-A1- 2009 055 685

## Description

### TECHNICAL FIELD

The present invention relates to an electronic control unit for a moving body.

### BACKGROUND ART

There are some types of electronic control unit for a moving body that include two CPUs (Central Processing Units) and control actuators while mutually monitoring the two CPUs.

Japanese Patent Application Laid-open publication No. H5-302541 discloses an electronic control unit that controls an electronic throttle valve of a vehicle. Specifically, two CPUs, which are a main CPU and a sub-CPU, perform computing processes, respectively, for controlling the electronic throttle valve. Subsequently, the two CPUs communicate their computation results with each other, and if a difference between values computed by the two CPUs is equal to or larger than a predetermined value for determining abnormality set in advance, the electronic control unit determines that the main CPU is malfunctioning.

JP 2003 097344 A discloses an engine ECU equipped with a control CPU that performs engine control and electronic throttle control and a monitoring CPU that monitors the control status of the electronic throttle control. Between these CPUs, communication data are transmitted and received by clock synchronizing communication. Between the control CPU and the monitoring CPU, the CPU on the transmission side calculates sum data by adding communication data, and further calculates check data from sum data to prevent the check data from becoming zero when the communication data are all zero, and transmits the check data with the communication data to the CPU on the receiving side. The CPU on the receiving side detects the abnormality of communication data based on the received check data.

EP 0 322 141 A2 discloses a dual computer cross-checking system which includes a control computer for controlling a process in accordance with input data and a monitoring computer. The two computers are interconneted to exchange check data on a cyclic basis, each computer carrying out a number of processing operations on the received check data before transmitting the data thus processed to the other computer. In addition, each computer checks the received check data against an expected value. An error condition is detected if the result of at least one of these comparisons is found to be incorrect.

US 2009/055685 A1 relates to an electronic apparatus. A first microcomputer is monitored by a second microcomputer, which periodically transmits data relating to a main function to the first microcomputer to be processed. The first microcomputer periodically updates a variable value, performs a predetermined calculation operation whose final result should be a specific fixed value, adds that final result to the updated variable value to obtain a sum value, and transmits the sum value and updated variable value concurrently to the second microcomputer. The second microcomputer determines that the first microcomputer is operating abnormally if the difference between the received sum value and variable value is not equal to the specific fixed value.

### SUMMARY OF THE INVENTION

However, because the electronic control unit described above with reference to Japanese Patent Application Laid-open publication No. H5-302541 performs a computing process for controlling the electronic throttle valve not only at the main CPU but also at the sub-CPU, it needs a sub-CPU having a capability for performing the same computing process as the main CPU does. This has caused an increase of the manufacturing cost of the electronic control unit. In addition, parameters for controlling the electronic throttle valve vary from time to time. Therefore, when comparing the computation results by communication between the two CPUs, the two CPUs need to clearly define timings for the computing processes. Therefore, the conventional electronic control unit needs to perform complicated processes of synchronizing the timings for the computing processes.

In addition, there are cases where different types of vehicles adopt different ways of controlling the electronic throttle valve. In this case, it is necessary to change a program for performing abnormality monitoring at a CPU for each model of the vehicles.

The present invention has been achieved in view of the above problems, and an object of the present invention is to provide an electronic control unit for a moving body, which is capable of performing mutual monitoring between multiple CPUs in an efficient manner.

The technical problems are solved by the features of independent claim 1. Preferable embodiments are given in the dependent claims.

According to the present invention, because CPUs are configured to monitor each other by performing a computing process using a test value and a common value instead of performing a computing process required for controlling a control target and using a result of the computing process, it is possible to reduce a processing load of the CPUs. Furthermore, because using the test value eliminates the necessity of synchronizing timings for starting the computing processes for the mutual monitoring between the CPUs, it is possible to simplify the device configuration.

### BRIEF DESCRIPTION OF THE DRAWINGS

FIG. 1 is a block diagram of an electronic control unit for a moving body according to an embodiment of the present invention;
FIG. 2 is a flowchart of a mutual monitoring method according to the present embodiment;
FIG. 3 is a flowchart of a process of acquiring a test value according to the present embodiment;
FIG. 4A is a flowchart of a process of calculating a test value according to the present embodiment;
FIG. 4B is a table showing a computation code and a computation value in each computing process according to the present embodiment; and
FIG. 5 is a timing chart of a mutual monitoring method according to the present embodiment.

### EMBODIMENT FOR CARRYING OUT THE INVENTION

An embodiment of the present invention will be explained below in detail with reference to the accompanying drawings.

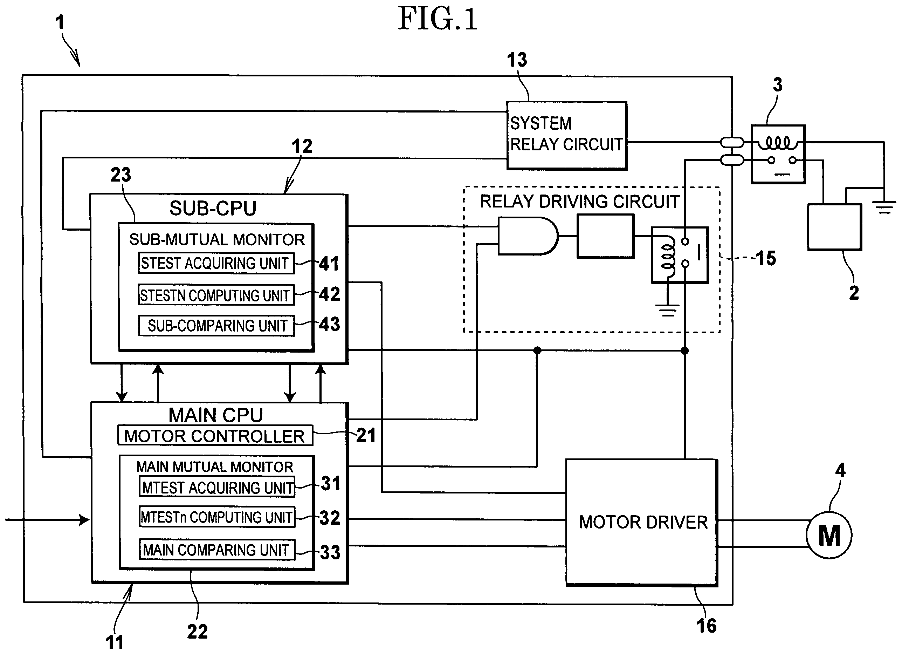

FIG. 1 is a block diagram of an electronic control unit for a moving body according to the present embodiment.

As shown in FIG. 1, an electronic control unit for a moving body (hereinafter, "electronic control unit") 1 is configured to perform a rotation control of a motor 4 that is an actuator, by being supplied with a power from a battery 2 via a system relay 3. Specifically, the electronic control unit 1 includes a main CPU 11 as a first CPU and a sub-CPU 12 as a second CPU. The power from the battery 2 is supplied to the CPUs 11 and 12 via a system relay circuit 13. Furthermore, the two CPUs 11 and 12 are connected to each other in a manner in which they can communicate with each other. Signals output from the two CPUs 11 and 12 are then supplied to a relay driving circuit 15 and a motor driver 16. The motor driver 16 is configured to control a current flowing through a coil of the motor 4.

The main CPU 11 includes a ROM (Read Only Memory) and a RAM (Random Access Memory) (both not shown) and other circuits, and can be functionally divided into a motor controller 21 and a main mutual monitor 22 as a first mutual monitor. The motor controller 21 receives a signal that is externally supplied and performs a computation for performing a rotation control of the motor 4 that is a control target. The main mutual monitor 22 is functionally divided into an MTEST acquiring unit 31 (test value acquiring unit) for acquiring a test value, an MTESTn computing unit 32 (test computing unit) for performing a computing process using the test value and a transmission of a computation value, and a main comparing unit 33 for diagnosing the sub-CPU 12. The main CPU 11 can further include a control unit or a computing unit for realizing other functions. For example, if the control target is an actuator other than the motor, a control unit for such an actuator is provided instead of the motor controller. When a control of a device other than the actuator is to be performed, a control unit for the device is provided.

The sub-CPU 12 includes a ROM and a RAM (both not shown), other circuits, and a sub-mutual monitor 23 as a second mutual monitor. The sub-mutual monitor 23 is functionally divided into an STEST acquiring unit 41 (test value acquiring unit) for acquiring a test value, an STESTn computing unit 42 (test computing unit) for performing a computing process using the test value and a transmission of a computation value, and a sub-comparing unit 43 for diagnosing the main CPU 11. The sub-CPU 12 can further include a control unit or a computing unit for realizing other functions.

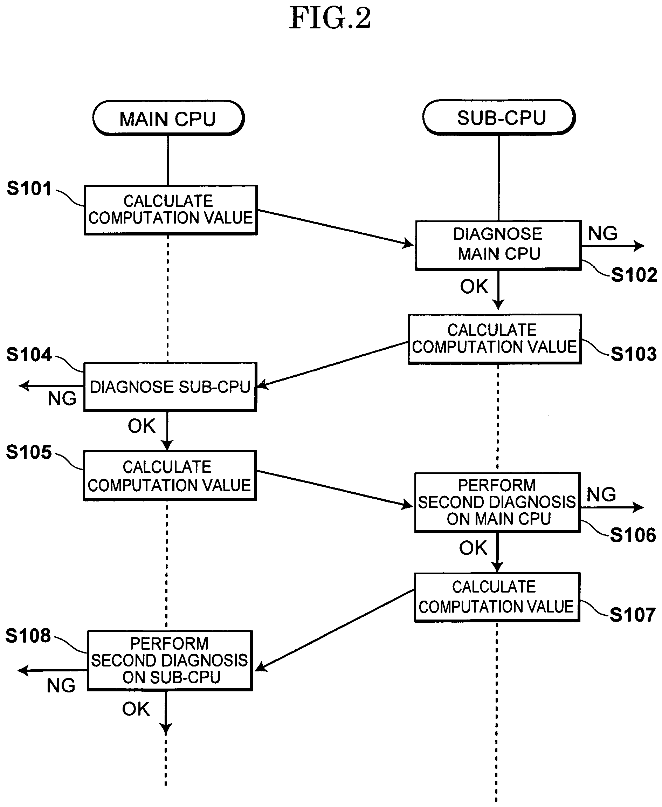

A mutual monitoring method for mutually monitoring operations of the CPUs 11 and 12 each other is explained below mainly with reference to FIG. 2.

FIG. 2 is a flowchart of a mutual monitoring method according to the present embodiment.

The mutual monitoring method for mutually monitoring the CPUs 11 and 12 is to perform mutual monitoring by communicating a result obtained from a computing process on the test value between the two CPUs 11 and 12.

As shown in FIG. 2, at Step S101, the main CPU 11 calculates a computation value to be diagnosed by the sub-CPU 12. Specifically, the MTEST acquiring unit 31 of the main CPU 11 acquires a test value MTEST. The test value MTEST is a value that can be known to both the main CPU 11 and the sub-CPU 12, and a value that can be acquired with a load that does not affect a driving control of the motor 4 is used as the test value MTEST. Such test value MTEST includes, for example, a result of core diagnosis of each of the CPUs 11 and 12, data stored in a predetermined area of each of the ROMs and the like.

The MTESTn computing unit 32 of the main CPU 11 then performs a predetermined computing process, for example, a subtracting process, on the test value MTEST by using a common value N, and calculates a computation value MTEST1: A value that can be known to both the main CPU 11 and the sub-CPU 12, for example, a value stored in advance in each of the ROMs, is used as the common value N. The computation value MTEST1 is then transmitted to the sub-CPU 12 by communication.

Next, at Step S102, the sub-CPU 12 diagnoses the main CPU 11. Upon acquiring the computation value MTEST1, the sub-comparing unit 43 of the sub-CPU 12 performs a predetermined inverse computing process on the computation value MTEST1, for example, a process of adding the common value N to the computation value MTEST1, and calculates the test value MTEST. The inverse computing process means a process of restoring the test value MTEST from the computation value MTEST1 by canceling an effect of the computing process performed on the test value MTEST at the main CPU 11.

The sub-comparing unit 43 then compares the test value STEST acquired by the STEST acquiring unit 41 with the test value MTEST calculated by the inverse computing process. The STEST acquiring unit 41 acquires the test value STEST by performing the same process as that performed at the main CPU 11 to acquire the test value MTEST. The test values MTEST and STEST are obtained as the same value when the two CPUs 11 and 12 are operating normally.

That is, if the two CPUs 11 and 12 are operating normally, the sub-CPU 12 can restore the test value MTEST that has been acquired by the main CPU 11. Furthermore, the test value MTEST is supposed to match the test value STEST acquired by the sub-CPU 12 itself.

Therefore, when the calculated test value MTEST and the acquired test value STEST match each other, the sub-comparing unit 43 determines that the main CPU 11 is operating normally (OK). On the other hand, when the calculated test value MTEST and the acquired test value STEST do not match each other, the sub-comparing unit 43 determines that the main CPU 11 is operating abnormally (NG).

After diagnosing the main CPU 11, the sub-CPU 12 advances the process to Step S103. At Step S103, the sub-CPU 12 calculates a computation value to be diagnosed by the main CPU 11. That is, the STESTn computing unit 42 of the sub-CPU 12 performs a predetermined computing process, for example, a subtracting process, on the test value STEST by using the common value N, and calculates a computation value STEST1. The computation value STEST1 is then transmitted to the main CPU 11 by communication.

At Step S104, the main CPU 11 diagnoses the sub-CPU 12. Upon acquiring the computation value STEST1, the main comparing unit 33 performs a predetermined inverse computing process on the computation value STEST1, for example, a process of adding the common value N to the computation value STEST1, and calculates the test value STEST. The inverse computing process means a process of restoring the test value STEST from the computation value STEST1 by canceling an effect of the computing process performed on the test value STEST at the sub-CPU 12.

When the two CPUs 11 and 12 are operating normally, the main CPU 11 can restore the test value STEST that has been acquired by the sub-CPU 12. Furthermore, the test value STEST is supposed to match the test value MTEST acquired by the main CPU 11 itself.

Therefore, the main comparing unit 33 compares the calculated test value STEST with the acquired test value MTEST. When both values match each other, the main comparing unit 33 determines that the sub-CPU 12 is operating normally (OK). On the other hand, when the calculated test value STEST and the acquired test value MTEST do not match each other, the main comparing unit 33 determines that the sub-CPU 12 is operating abnormally (NG).

At subsequent Steps S105 to S108, the same processes as the above processes are repeated with different types of computing processes. First, at Step S105, the main CPU 11 calculates a computation value to be diagnosed by the sub-CPU 12. The MTEST acquiring unit 31 of the main CPU 11 acquires the test value MTEST, and the MTESTn computing unit 32 performs a predetermined computing process, for example, an adding process, on the test value MTEST by using the common value N, and calculates a computation value MTEST2. The computing process at this step is a process different from the subtracting process performed at Step S101, which is a computing process sequentially selected from a plurality of predetermined computing processes. The computation value MTEST2 is then transmitted to the sub-CPU 12 by communication.

At Step S106, the sub-CPU 12 performs the second diagnosis on the main CPU 11. The sub-comparing unit 43 performs a process of subtracting the common value N from the computation value MTEST2 as a predetermined inverse computing process on the computation value MTEST2, and calculates a test value MTEST.

Furthermore, the sub-comparing unit 43 compares the calculated test value MTEST with the acquired test value STEST, and when both values match each other, determines that the main CPU 11 is operating normally (OK). On the other hand, when the calculated test value MTEST and the acquired test value STEST do not match each other, the sub-comparing unit 43 determines that the main CPU 11 is operating abnormally (NG).

Subsequently, at Step S107, the sub-CPU 12 calculates a computation value to be diagnosed by the main CPU 11. The STEST acquiring unit 41 of the sub-CPU 12 acquires a test value STEST, and the STESTn computing unit 42 performs a predetermined computing process, for example, an adding process, on the test value STEST by using the common value N, and calculates a computation value STEST2. The computation value STEST2 is then transmitted to the main CPU 11 by communication.

At Step S108, the main CPU 11 performs the second diagnosis on the sub-CPU 12. The main comparing unit 33 of the main CPU 11 performs a process of subtracting the common value N from the computation value STEST2 as a predetermined inverse computing process on the computation value STEST2, and calculates a test value STEST.

The main comparing unit 33 then compares the calculated test value STEST with the acquired test value MTEST, and when both values match each other, determines that the sub-CPU 12 is operating normally (OK). On the other hand, when the calculated test value STEST and the acquired test value MTEST do not match each other, the main comparing unit 33 determines that the sub-CPU 12 is operating abnormally (NG).

Thereafter, the same processes are performed while changing the computing process in a sequential manner between the main CPU 11 and the sub-CPU 12 every predetermined times. For the computing processes, for example, when calculating the computation values MTESTn and STESTn (n is a positive integer) from the test values MTEST and STEST, respectively, a subtraction (first computing process) → an addition (second computing process) → a multiplication (third computing process) → a division (fourth computing process) → a remainder computation (fifth computing process) are used in a sequential manner. On the other hand, when calculating the test values MTEST and STEST from the computation values MTESTn and STESTn, respectively, an addition (first inverse computing process) → a subtraction → (second inverse computing process) → a division (third inverse computing process) → a multiplication (fourth inverse computing process) → a four mixed arithmetic computation (fifth inverse computing process) are used in a sequential manner. The four mixed arithmetic computation corresponds to an inverse computation of the remainder computation. For example, if the remainder computation is a calculation of dividing a test value 40 by 7, that is, 40÷7=5, with a remainder 5, the four mixed arithmetic computation is a calculation of obtaining 40 by calculating 5+7x5. It is preferable to use the same type of computing process for calculating the computation values MTESTn and STESTn on the main CPU 11 side and the sub-CPU 12 side. Furthermore, the type and the sequence of the computing processes are not limited to the ones described above. For example, the same computing process can be performed two times or more in a consecutive manner.

For the common value N, a single value is used at all times regardless of the type of computing process. However, a plurality of values can be used in a circulating manner for the common value N. When circulating a plurality of values, a plurality of common values N and a sequence of using the common values N are registered in advance in a ROM of each of the CPUs 11 and 12. Furthermore, the MTESTn computing unit 32 and the STESTn computing unit 42 are configured to perform the computing processes by reading the common values N in a sequence that is registered in advance.

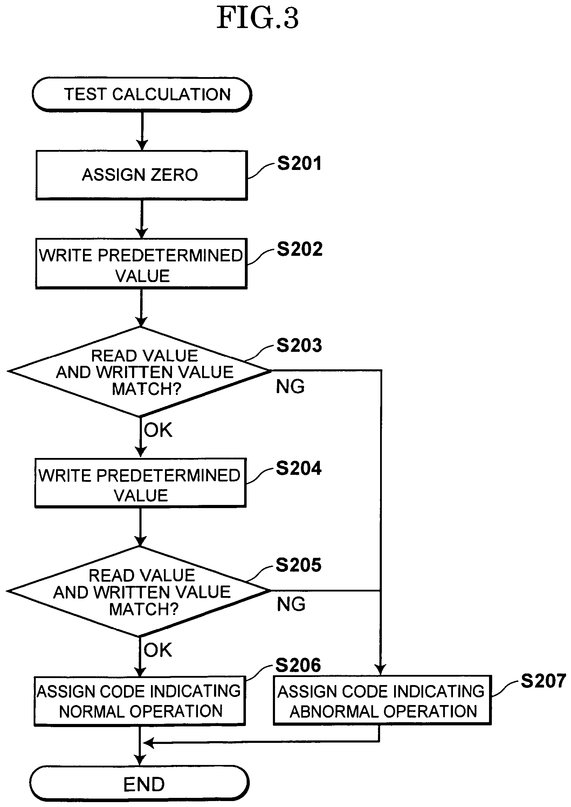

A case of using a result of core diagnosis of each of the CPUs 11 and 12 is explained next with reference to FIG. 3, as an example of a process of acquiring the test values MTEST and STEST. Although a process in the main CPU 11 is explained below, the same process is also performed in the sub-CPU 12.

FIG. 3 is a flowchart of a process of acquiring the test value according to the present embodiment.

First, at Step S201, the MTEST acquiring unit 31 assigns zero to the test value MTEST as an initial value. Subsequently, at Step S202, the MTEST acquiring unit 31 writes a predetermined value, for example, 0×55, in a general-purpose register of the main CPU 11. Thereafter, at Step S203, the MTEST acquiring unit 31 reads a value of the same general-purpose register and compares it with the value that is written earlier in the general-purpose register.

When the read value of the general-purpose register is the same value as the written value, that is, 0×55, the process advances to Step S204 where the MTEST acquiring unit 31 writes a predetermined value, for example, 0×AA, in the general-purpose register. Thereafter, at Step S205, the MTEST acquiring unit 31 reads a value of the same general-purpose register. When the read value of the general-purpose register is the same value as the written value, that is, 0×AA, the process advances to Step S206. In this case, the MTEST acquiring unit 31 assigns a code indicating that the core of the main CPU 11 is operating normally, for example, "40", to the test value MTEST.

On the other hand, if the read value and the written value of the general-purpose register do not match each other at either Step S203 or Step S205 or both, the process advances to Step S207. As any of these cases means that the writing in the general-purpose register or the reading from the general-purpose register has not been performed normally, and thus the MTEST acquiring unit 31 assigns a code indicating that the core of the main CPU 11 is operating abnormally, for example, "50" to the test value MTEST.

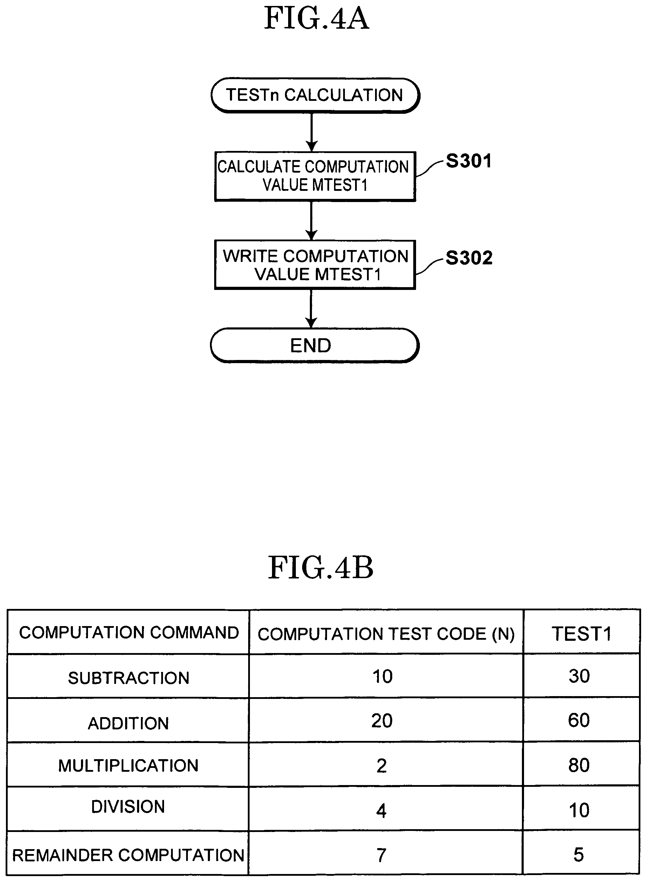

A flowchart of a case where the MTESTn computing unit 32 or the STESTn computing unit 42 calculates the computation value MTESTn or the computation value STESTn by the computing processes, respectively, when the result of core diagnosis of the main CPU 11 or the sub-CPU 12 as the test value is shown in FIG. 4A. Although the processes in the main CPU 11 are explained below, the same processes are performed in the sub-CPU 12.

FIG. 4A is a flowchart of a process of calculating the test value according to the present embodiment.

First, at Step S301, the computation value MTEST1 is calculated. The computation value MTEST1 is obtained by, for example, assigning a result of subtracting a value of a computation test code from the test value MTEST. Subsequently, at Step S302, the computation value MTEST1 is written in a transmission register.

The computation code and the computation value MTEST1 in each computing process are shown in FIG. 4B. A case of using a code when the CPUs 11 and 12 are operating normally, that is, "40", as the test value is shown as an example.

FIG. 4B is a table showing the computation code and the computation value in each computing process according to the present embodiment.

When the code of the common value N for the subtracting process is assigned with "10", the computation value MTEST1 becomes 40-10=30. When the code of the common value N for the adding process is assigned with "20", the computation value MTEST1 becomes 40+20=60. When the code of the common value N for the multiplying process is assigned with "2", the computation value MTEST1 becomes 40x2=80. When the code of the common value N for the dividing process is assigned with "4", the computation value MTEST1 becomes 40÷4=10. When the code of the common value N for the remainder computation is assigned with "7", the computation value MTEST1 becomes "5" that is a remainder obtained by dividing 40 by 7.

These computation values MTEST1 are values obtained when the CPUs 11 and 12 are operating normally. That is, when correct values are obtained as the computation values MTEST1, it is possible to confirm that functions of reading and writing in the general-purpose register, a branch command, and a comparison command as the core function of the CPUs 11 and 12, and computing circuits of the CPUs 11 and 12 are all functioning in a correct manner.

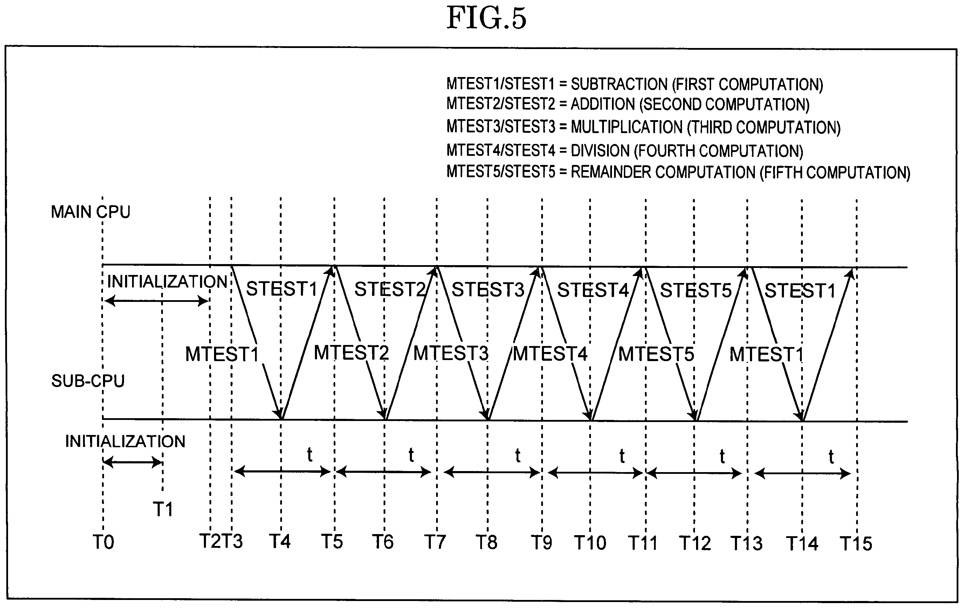

A process performed when an error occurred in the mutual monitoring by the main CPU 11 and the sub-CPU 12 shown in the flowchart of FIG. 2 is explained with reference to a timing chart shown in FIG. 5. In FIG. 5, the horizontal axis represents a time and the vertical axis represents operations of the main CPU 11 and the sub-CPU 12. FIG. 5 is a timing chart of the mutual monitoring method according to the present embodiment, showing a case where the mutual monitoring is performed at a predetermined interval in a consecutive manner and no error has occurred in the CPUs 11 and 12. That is, the main CPU 11 and the sub-CPU 12 are reset at a time T0, and an initialization of the sub-CPU 12 is completed at a time T1. An initialization of the main CPU 11 is taken until a time T2.

When the two CPUs 11 and 12 start their usual operations, respectively, the main CPU 11 outputs the computation value MTEST1 first at a time T3. Upon receiving the computation value MTEST1, the sub-CPU 12 outputs the computation value STEST1 at a time T4. Thereafter, the main CPU 11 outputs a computation value MTEST2, a computation value MTEST3, a computation value MTEST4, and a computation value MTEST5 at times T5, T7, T9, and T11, respectively. On the other hand, the sub-CPU 12 outputs a computation value STEST2, a computation value STEST3, a computation value STEST4, and computation value STEST5 at times T6, T8, T10, and T12, respectively.

As a total of five computations including the four computations and the remainder computation are performed in a sequential manner in this mutual monitoring method of the CPUs 11 and 12, at a time T13, the main CPU 11 performs the same computation as that performed at the time T3 and outputs the computation value MTEST1. Similarly, at a time T14, the sub-CPU 12 performs the same computation as that performed at the time T4 and outputs the computation value STEST1. Thereafter, the same processes are repeated so that a process in which one of the main CPU 11 and the sub-CPU 12 monitors the other CPU is repeated in an alternate manner.

In this case, the main CPU 11 does not detect any abnormality of the sub-CPU 12, and also the sub-CPU 12 does not detect any abnormality of the main CPU 11. As a result, a rotation control of the motor 4 is performed by receiving instructions from the two CPUs 11 and 12.

Next, a process to be performed when an abnormality occurred in either the main CPU 11 or the sub-CPU 12 is explained below case by case.

(A) A process to be performed when the main CPU 11 is determined to be abnormal at the time of activation and a case where a computation value MTEST1 transmitted first from the main CPU 11 at the time of recovery activation from an abnormality is determined to be abnormal at the sub-CPU 12 is explained. This type of case includes the following states.

| | |
|---|---|
| (A1) T3 → T4: main CPU → sub-CPU | Abnormal (sub-side communication NG) |
| (A2) T4 → T5: sub-CPU → main CPU | Abnormal (main side communication NG) |
| (A3) T5 → T6: main CPU → sub-CPU | Abnormal |
| (A4) T6 → T7: sub-CPU → main CPU | Abnormal |
| (A5) T7 → T8: main CPU → sub-CPU | Normal |
| (A6) T8 → T9: sub-CPU → main CPU | Normal |
| (A7) T9 → T10: main CPU → sub-CPU | Normal (sub-side communication OK) |
| (A8) T10 → T11: sub-CPU → main CPU | Normal (sub-side communication OK) |

The sub-CPU 12 diagnoses the main CPU 11 based on the computation value MTEST1 that is calculated at the main CPU 11 at the time T3. In this case, because the computation value MTEST1 is not a normal value but an abnormal value, the sub-CPU 12 determines that the main CPU 11 is abnormal (sub-side communication NG). In this case, the STESTn computing unit 42 of the sub-CPU 12 substitutes the computation value MTEST1 that is a value transmitted from the main CPU 11, that is, an abnormal value, into the computation value STEST1 and transmits it to the main CPU 11.

Furthermore, the main CPU 11 diagnoses the sub-CPU 12 based on the computation value STEST1 that is calculated at the sub-CPU 12 at the time T4. In this case, because an abnormal value is transmitted as the computation value STEST1, the main CPU 11 determines that the sub-CPU 12 is abnormal (main side communication NG).

Because both the computation value MTEST2 calculated at the main CPU 11 at the subsequent time T5 and the computation value STEST2 calculated at the sub-CPU 12 at the time T6 are abnormal values, the CPUs 11 and 12 maintain the determination of the abnormality.

After the main CPU 11 transmitted the second diagnosis result to the sub-CPU 12 at the time T5, the main CPU 11 returns from an abnormal state to a normal state, and therefore, the third computation value MTEST3 calculated at the time T7 becomes a normal value. Therefore, the sub-CPU 12 determines that the main CPU 11 is normal based on the computation value MTEST3 calculated at the main CPU 11 at the time T7. At this time, because the sub-comparing unit 43 of the sub-CPU 12 determines that the main CPU 11 is normal after the determination of the abnormality, it does not make a determination of communication OK until it receives normal computation value MTESTn two times in a row. Therefore, driving of the motor 4 is not permitted.

Furthermore, the main CPU 11 determines that the sub-CPU 12 is normal based on the computation value STEST3 that is calculated at the sub-CPU 12 at the time T8. At this time, because the main comparing unit 33 of the main CPU 11 determines that the sub-CPU 12 is normal after a determination of abnormality, it does not make a determination of communication OK until it receives normal computation values STESTn two times in a row. Therefore, driving of the motor 4 is not permitted.

Further, the sub-CPU 12 determines that the main CPU 11 is normal based on the normal computation value MTEST4 that is calculated at the main CPU 11 at the time T9. As the sub-CPU 12 made the determination of normality two times in a row with this, the sub-CPU 12 makes a determination of communication OK. The sub-comparing unit 43 of the sub-CPU 12 then outputs a permission signal to the motor driver 16. The main CPU 11 then determines that the sub-CPU 12 is normal based on the normal computation value STESTn that is calculated at the sub-CPU 12 at the time T10. As the main CPU 11 made the determination of normality two times in a row with this, the main CPU 11 makes a determination of communication OK. The main comparing unit 33 of the main CPU 11 then outputs a permission signal to the motor driver 16. As a result, the permission signals from the two CPUs 11 and 12 are gathered together, by which a rotation control of the motor 4 is started.

(B) A process to be performed when the sub-CPU 12 is determined to be abnormal at the time of activation and a case where a computation value STEST1 transmitted first from the sub-CPU 12 at the time of recovery activation from an abnormality is determined to be abnormal at the main CPU 11 is explained. This type of case includes the following states.

| | |
|---|---|
| (B 1) T3 → T4: main CPU → sub-CPU | Normal (sub-side communication OK) |
| (B2) T4 → T5: sub-CPU → main CPU | Abnormal (main side communication NG) |
| (B3) T5 → T6: main CPU → sub-CPU | Normal |
| (B4) T6 → T7: sub-CPU → main CPU | Abnormal |
| (B5) T7 → T8: main CPU → sub-CPU | Normal |
| (B6) T8 → T9: sub-CPU → main CPU | Normal |
| (B7) T9 → T10: main CPU → sub-CPU | Normal |
| (B8) T10 → T11: sub-CPU → main CPU | Normal (main side communication OK) |

The sub-CPU 12 diagnoses the main CPU 11 based on the computation value MTEST1 that is calculated at the main CPU 11 at the time T3. In this case, because the computation value MTEST1 is a normal value, the sub-CPU 12 determines that the main CPU 11 is normal (sub-side communication OK). On the other hand, because the computation value STEST1 calculated at the sub-CPU 12 at the time T4 is an abnormal value, the main CPU 11 determines that the sub-CPU 12 is abnormal (sub-side communication NG).

At the time T5, the main CPU 11 creates the computation value MTEST2 and transmits it to the sub-CPU 12 regardless of an operation state of the sub-CPU 12. Therefore, at the time T6, the sub-CPU 12 determines that the main CPU 11 is normal. On the other hand, because the computation value STEST2 calculated at the sub-CPU 12 at the time T6 is an abnormal value, the main CPU 11 maintains the determination of abnormality of the sub-CPU 12 at the time T7.

When the sub-CPU 12 is recovered to a normal state by the time T8, the computation value STEST3 that is transmitted to the main CPU 11 at the time T8 becomes a normal value. As the main CPU 11 made the determination of abnormality one time, it determines that the communication is OK when the determination of normality is continued for two times, that is, at the time T11. The main CPU 11 then transmits the permission signal to the motor driver 16.

(C) When there is no response from the sub-CPU 12 at the time of activation.

A case where the main CPU 11 transmits the computation value MTESTn at the time of activation but the computation value MTESTn is not transmitted from the sub-CPU 12 is explained. When a signal is not transmitted from the sub-CPU 12 to the main CPU 11 after the main CPU 11 transmits the computation value MTEST1 to the sub-CPU 12 at the time T3, the main CPU 11 transmits the computation value MTESTn to the sub-CPU 12 every time when a predetermined time t elapses. When there is no response from the sub-CPU 12, the main CPU 11 keeps on transmitting the computation value MTESTn until a predetermined time, for example 255 milliseconds, elapses. When the predetermined time elapses, the main comparing unit 33 of the main CPU 11 makes a determination of a communication failure of the sub-CPU 12 and terminates the process. Thereafter, the main CPU 11 stops the communication until the system of the electronic control unit 1 is reset.

(D) When an abnormality occurred at the main CPU 11 in a consecutive manner after an operation determination.

This type of case includes the following states.

| | |
|---|---|
| (D1) T3 → T4: main CPU → sub-CPU | Normal (sub-side communication OK) |
| (D2) T4 → T5: sub-CPU → main CPU | Normal (main side communication NG) |
| (D3) T5 → T6: main CPU → sub-CPU | Normal |
| (D4) T6 → T7: sub-CPU → main CPU | Normal |
| (D5) T7 → T8: main CPU → sub-CPU | Abnormal |
| (D6) T8 → T9: sub-CPU → main CPU | Abnormal |
| (D7) T9 → T10: main CPU → sub-CPU | Abnormal |
| (D8) T10 → T11: sub-CPU → main CPU | Abnormal |
| (D9) T11 → T12: main CPU → sub-CPU | Abnormal (sub-side communication NG) |

From the time T3 to the time T7, both the CPUs 11 and 12 make a determination of normality. Thereafter, when the computation value MTEST3 calculated at the main CPU 11 at the time T7 is an abnormal value, the sub-CPU 12 determines that the main CPU 11 is abnormal. Following this determination, the main CPU 11 also determines that the sub-CPU 12 is abnormal.

When the computation value MTEST5 transmitted to the sub-CPU 12 at the time T11 is an abnormal value, the sub-CPU 12 makes a determination of abnormality for the third time. As the determination of abnormality is made three times in a row with this at the sub-CPU 12 side, the sub-comparing unit 43 makes a determination of communication NG, and stops driving the motor. Thereafter, the sub-CPU 12 stops the communication until the system of the electronic control unit 1 is reset.

(E) When communication from the main CPU 11 is disrupted.

When the communication has been normal until the second time from the activation in both the main CPU 11 and the sub-CPU 12 but the third communication from the main CPU 11 is disrupted, the sub-CPU 12 makes a determination of communication NG and stops driving the motor as the communication NG when the communication disruption is continued for three times. Thereafter, the sub-CPU 12 stops the communication until the system is reset.

(F) When the communication is recovered after the communication from the main CPU 11 is disrupted.

This type of case includes the following states.

| | |
|---|---|
| (F1) T3 → T4: main CPU → sub-CPU | Normal (sub-side communication OK) |
| (F2) T4 → T5: sub-CPU → main CPU | Normal (main side communication OK) |
| (F3) T5 → T6: main CPU → sub-CPU | Normal |
| (F4) T6 → T7: sub-CPU → main CPU | Normal |
| (F5) T7 → T8: main CPU → sub-CPU | Communication disruption |
| (F6) T8 → T9: sub-CPU → main CPU | Communication disruption |
| (F7) T9 → T10: main CPU → sub-CPU | Communication disruption |
| (F8) T10 → T11: sub-CPU → main CPU | Communication disruption |
| (F9) T11 → T12: main CPU → sub-CPU | Normal |
| (F10) T12 → T13: sub-CPU → main CPU | Normal |
| (F11) T13 → T14: main CPU → sub-CPU | Normal |
| (F12) T14 → T15: sub-CPU → main CPU | Normal (sub-side communication OK) |

From the time T3 to the time T7, both the CPUs 11 and 12 make a determination of normality. Thereafter, the communication from the main CPU 11 is disrupted from the third communication at the time T7. After two times of communication disruption since then, the communication from the main CPU 11 is recovered at the time T11. When the computation value MTEST5 transmitted from the main CPU 11 at the time T11 is determined to be a normal value at the sub-CPU 12, the sub-CPU 12 calculates the computation value STEST5 according to a computing pattern of the computation value MTEST5. As the main CPU 11 is operating normally, the computation value MTEST5 is calculated by the remainder computation, and therefore, the sub-CPU 12 calculates the computation value STEST5 by the four mixed arithmetic computation that is the inverse computation of the remainder computation.

At the time T13, the main CPU 11 calculates the computation value MTEST6 by using a computing process next to the remainder computation, for example, the subtraction, and transmits it to the sub-CPU 12. The sub-CPU 12 determines whether it is normal or abnormal by using a computing process next to the last performed remainder computation, for example, the division. When it is determined that the computation value MTEST6 is a normal value, it makes a determination of communication OK.

(G) When the communication is recovered after the communication from the main CPU 11 is disrupted, but a correct computation value has not been obtained.

This type of case includes the following states.

| | |
|---|---|
| (G1) T3 → T4: main CPU → sub-CPU | Normal (sub-side communication OK) |
| (G2) T4 → T5: sub-CPU → main CPU | Normal (main side communication OK) |
| (G3) T5 → T6: main CPU → sub-CPU | Normal |
| (G4) T6 → T7: sub-CPU → main CPU | Normal |
| (G5) T7 → T8: main CPU → sub-CPU | Communication disruption |
| (G6) T8 → T9: sub-CPU → main CPU | Communication disruption |
| (G7) T9 → T10: main CPU → sub-CPU | Communication disruption |
| (G8) T10 → T11: sub-CPU → main CPU | Communication disruption |
| (G9) T11 → T12: main CPU → sub-CPU | Normal |
| (G10) T12 → T13: sub-CPU → main CPU | Normal |
| (G11) T13 → T14: main CPU → sub-CPU | Abnormal (sub-side communication NG) |

From the time T3 to the time T7, both the CPUs 11 and 12 make a determination of normality. Thereafter, the communication from the main CPU 11 is disrupted from the third communication at the time T7. After two times of communication disruption since then, the communication from the main CPU 11 is recovered. When the computation value MTEST5 transmitted from the main CPU 11 at the time T11 is determined to be a normal value at the sub-CPU 12, the sub-CPU 12 calculates the computation value STEST5 according to a computing pattern of the computation value MTEST5. At this time, the main CPU 11 is operating abnormally, and if the computation value MTEST5 is calculated not by the remainder computation following the usual order but by the division, the sub-CPU 12 accordingly calculates the computation value STEST5 by the division.

At the time T13, the main CPU 11 calculates the computation value MTEST6 by other computation, for example, the division, without using the addition that is the next computing process following the division and transmits it to the sub-CPU 12. At the time T14, the sub-CPU 12 determines whether it is normal or abnormal by using a computing process next to the last performed division, for example, the addition. Therefore, the test values MTEST and STEST do not match each other. As a result, the main CPU 11 determines that the computation value MTEST6 is an abnormal value, and makes a determination of communication NG.

(H) When the determination of abnormality occurred in a row at the sub-CPU side after an operation determination.

This type of case includes the following states.

| | |
|---|---|
| (H1) T3 → T4: main CPU → sub-CPU | Normal (sub-side communication OK) |
| (H2) T4 → T5: sub-CPU → main CPU | NORMAL (main side communication OK) |
| (H3) T5 → T6: main CPU → sub-CPU | Normal |
| (H4) T6 → T7: sub-CPU → main CPU | Normal |
| (H5) T7 → T8: main CPU → sub-CPU | Normal |
| (H6) T8 → T9: sub-CPU → main CPU | Abnormal |
| (H7) T9 → T10: main CPU → sub-CPU | Normal |
| (H8) T10 → T11: sub-CPU → main CPU | Abnormal |
| (H9) T11 → T12: main CPU → sub-CPU | Normal |
| (H10) T12 → T13: sub-CPU → main CPU | Abnormal (main side communication NG) |

From the time T3 to the time T8, both the CPUs 11 and 12 make a determination of normality. Thereafter, when the computation value STEST3 calculated at the sub-CPU 12 at the time T8 is determined to be an abnormal value, the main CPU 11 determines that the sub-CPU 12 is abnormal. On the other hand, because the main CPU 11 is operating normally, the sub-CPU 12 determines that the main CPU 11 is normal based on the computation value MTEST4 that is calculated at the main CPU 11 at the time T9.

Furthermore, the main CPU 11 makes the second determination of abnormality based on the computation value MTEST4 that is calculated at the sub-CPU 12 at the time T10. The main CPU 11 then performs the third determination of abnormality based on the computation value MTEST5 that is calculated at the sub-CPU 12 at the time T12. As the determination of abnormality is made three times in a row, the main comparing unit 33 of the main CPU 11 makes a determination of communication NG. This stops driving the motor. Thereafter, the main CPU 11 stops the communication until the system of the electronic control unit 1.

(I) When the communication from the sub-CPU 12 is disrupted.

When until the second communication from the activation is normal for both the main CPU 11 and the sub-CPU 12 but the third communication and the later from the sub-CPU 12 are disrupted, the main CPU 11 keeps on transmitting the computation value MTESTn at a predetermined time interval. If the communication disruption is continued for three times, the main CPU 11 stops driving of the motor while recognizing it as communication NG. Thereafter, the main CPU 11 stops the communication until the system is reset.

(J) When the sub-CPU 12 side is reset.

When the sub-CPU 12 is reset, the communication from the sub-CPU 12 is disrupted until the sub-CPU 12 is restarted. As the main comparing unit 33 of the main CPU 11 sets a time shorter than a restarting time of the sub-CPU 12 as a standby time when the communication from the sub-CPU 12 is disrupted, it becomes the communication NG when the sub-CPU 12 is reset.

(K) When the main CPU 11 side is reset.

When the main CPU 11 is reset, the communication from the main CPU 11 is disrupted until the main CPU 11 is restarted. As the sub-comparing unit 43 of the sub-CPU 12 sets a time shorter than a restarting time of the main CPU 11 as a standby time when the communication from the main CPU 11 is disrupted, it becomes the communication NG when the main CPU 11 is reset.

The number of abnormalities of operation or the number of communication disruptions until a decision is made as a communication failure is not limited to the above (A) to (K), but can be set to an arbitrary number.

An outline of a motor control in the electronic control unit 1 is explained below.

When the moving body is a motorcycle and the motor 4 is a motor for controlling an opening of a throttle valve of an engine of the motorcycle, information on an opening of an acceleration grip is input to the main CPU 11 of the electronic control unit 1. The motor controller 21 of the main CPU 11 acquires information such as an intake pressure of an intake pipe of the engine and calculates the opening of the throttle valve.

Meanwhile, the main CPU 11 and the sub-CPU 12 perform the mutual diagnosis at predetermined timings, respectively, in the same manner as explained with reference to FIGS. 2 to 4. When the main CPU 11 confirms a normal operation of the sub-CPU 12, the main CPU 11 outputs permission signals to the relay driving circuit 15 and the motor driver 16. Similarly, if the sub-CPU 12 confirms a normal operation of the main CPU 11, the sub-CPU 12 outputs permission signals to the relay driving circuit 15 and the motor driver 16. When the permission signals from the two CPUs 11 and 12 are input to the relay driving circuit 15, the relay is turned on and the motor driver 16 is connected to the battery 2.

Furthermore, when it is determined that the sub-CPU 12 is in the communication NG, the main CPU 11 outputs a command signal for stopping motor to the motor driver 16. On the other hand, when it is determined that the main CPU 11 is in the communication NG, the sub-CPU 12 outputs a command signal for stopping motor to the motor driver 16. The communication NG described here is a result determined at each of the CPUs 11 and 12 in the cases explained in (A) to (K), including a case where data are not transmitted from the CPUs 11 and 12 as well as a case where there is an error in data acquired by the CPUs 11 and 12.

When the motor 4 is an actuator for controlling an opening of the throttle valve, the CPUs 11 and 12 stop the motor 4 at a position where the throttle valve becomes a close state. Furthermore, when the sub-CPU 12 is in an abnormal state, the main CPU 11 can perform a process of stopping ignition and injection of fuel.

As explained above, in the present embodiment, the test values MTEST and STEST and the common value N that do not depend on a control process of the motor 4 are used in mutually monitoring the main CPU 11 and the sub-CPU 12. This makes it possible to perform the mutual monitoring with a simple computing process using the test values MTEST and STEST and the common value N. Furthermore, because the test values MTEST and STEST that do not depend on the control process of the motor 4 are used, it does not need to consider the timing for performing the mutual monitoring, compared to a case of using a value of the control process of the motor 4. From these aspects, it is possible to simplify a program for the mutual monitoring, without affecting the control process of the motor 4. Moreover, because it is possible to lessen a load of the process of the mutual monitoring, it is not necessary to select a CPU having a high processing capability. Particularly, it is possible to use a so-called low-spec device having a specification lower than the main CPU 11 as the sub-CPU 12.

Furthermore, because the test values MTEST and STEST that do not depend on the control process of the motor 4 are used, it is not necessary to change the program for the mutual monitoring for each model. In addition, it is possible to improve the work efficiency in manufacturing processes.

Further, in this mutual monitoring method, it is determined that the operation is abnormal when a trouble occurred in any one of a process of acquiring the test values MTEST and STEST, a process of computing the computation values MTESTn and STESTn, or a process of transmitting and receiving data. Therefore, it is possible to perform an operation check of a plurality of processes in an efficient manner. Particularly, when the results of diagnosing the core functions of the CPUs 11 and 12 are used for the test values MTEST and STEST, it is possible to detect an error of the core function of the CPUs 11 and 12 when performing the mutual monitoring. The core function of the CPUs 11 and 12 can be a simple processing, where programs initially installed in the CPUs 11 and 12 can be used or any method other than the present embodiment can be used. With an execution of the process of diagnosing the core function explained with reference to the flowchart shown in FIG. 3, it is possible to diagnose the general-purpose register, the comparison command, and the branch command of the CPUs 11 and 12 in a collective manner, making it possible to achieve an efficient diagnosis process.

In addition, because the type and the order of the computing processes are set in advance in the main CPU 11 and the sub-CPU 12, it is possible to reduce the data amount to be transmitted between the two CPUs 11 and 12. With setting of the common value N used in the computing process in advance, it is possible to further reduce the data amount to be transmitted between the two CPUs 11 and 12. Although there is a possibility of accidentally matching the computation results with a single type of computing process, the present embodiment employs executions of a plurality of computing processes in a sequential manner, thus improving the accuracy of the mutual monitoring.

### (Modification)

A modification of the above embodiment is explained below in detail.

In this modification of the above embodiment, a voltage value of the battery 2 is acquired as the test values MTEST and STEST, while the configuration of the electronic control unit is the same as that shown in FIG. 1.

A process of acquiring the test values MTEST and STEST is explained with reference to FIG. 3. Although a process in the main CPU 11 is explained below, the same process is also performed in the sub-CPU 12.

First, at Step S201, the MTEST acquiring unit 31 assigns zero to the test value MTEST as an initial value. Subsequently, at Step S202, the MTEST acquiring unit 31 reads a physical value Vbatt of a voltage of the battery 2. A physical value Vbatt of a voltage that is input to the main CPU 11 is used as the voltage value of the battery 2. As the main CPU 11 and the sub-CPU 12 may have different resolutions of A/D conversion from each other, a value obtained by performing a unit conversion of a digital value after the A/D conversion, that is, a physical value conversion, is used for performing a comparison to be described later.

At Step S203, the MTEST acquiring unit 31 compares the physical value Vbatt of the battery voltage with a standard voltage set in advance. When the physical value Vbatt of the battery voltage is equal to or lower than the standard voltage, the process advances to Step S207, setting a fixed value that is registered in advance to the test value MTEST. A case where the fixed value is set includes, for example, a time of activating the engine. The battery voltage is likely to decrease at the time of activating the engine and is difficult to be stabilized; however, because the fixed value is selected at Step S207 in this case, it is possible to execute the mutual monitoring in a stable manner regardless of the activation state of the engine.

On the other hand, at Step S204, if the physical value Vbatt of the battery voltage is equal to or lower than the standard voltage, the process advances to Step S205, obtaining an average value of the physical value Vbatt of the battery voltage for a predetermined time. When the average value of the physical value Vbatt of the battery voltage is higher than the standard voltage set in advance, the process advances to Step S206. On the other hand, if the average value of the physical value Vbatt of the battery voltage is equal to or lower than the standard voltage set in advance, the average value of the physical value Vbatt of the battery voltage is set to the test value MTEST.

A mutual monitoring process performed between the two CPUs 11 and 12 is explained with reference to FIG. 2. In this modification, one of the CPUs 11 and 12 compares test values MTEST and STEST obtained by inverse computing processes of computation values MTESTn and STESTn acquired by the other one of the CPUs 11 and 12 with test values MTEST and STEST acquired by itself, thus diagnosing the other one of the CPUs 11 and 12.

First, at Step S101, the main CPU 11 acquires the physical value Vbatt of a voltage of the battery as the test value MTEST, and calculates a computation value MTEST1 by subtracting the common value N from the test value MTEST. The computation value MTEST1 is then transmitted to the sub-CPU 12. At Step S102, the sub-CPU 12 acquires a test value STEST, and after performing an inverse computing process on the computation value MTEST1, subtracts the test value STEST from a result of the inverse computing process. The test value STEST is the physical value Vbatt of the battery voltage acquired by the sub-CPU 12. When a result of the subtraction is equal to or smaller than a predetermined value X, the main CPU 11 is determined to be normal. Thereafter, at Step S103, the sub-CPU 12 calculates a computation value STEST1 by subtracting the common value N from the test value STEST. The computation value STEST1 is then transmitted to the main CPU 11.

At Step S104, the main CPU 11 acquires the test value MTEST and performs an inverse computing process on the computation value STEST1. Thereafter, the main CPU 11 subtracts the test value MTEST from a result of the inverse computing process. The test value MTEST is the physical value Vbatt of the battery voltage acquired by the main CPU 11. When a result of the subtraction is equal to or smaller than a predetermined value X, the main comparing unit 33 determines that the sub-CPU 12 is normal. Thereafter, the main CPU 11 calculates a computation value MTEST2 by adding the common value N to the test value MTEST. The computation value MTEST2 is then transmitted to the sub-CPU 12.

Thereafter, in the same manner as the above procedures, the main CPU 11 and the sub-CPU 12 perform mutual monitoring while performing communication therebetween. A process for a case where each of the CPUs 11 and 12 is determined to be abnormal or a determining process when the communication is disrupted are the same as (A) to (K) explained with reference to FIG. 5.

As explained above, in this modification, data having a small variation amount per unit time, which can be acquired by the CPUs 11 and 12, are used as the test values MTEST and STEST. This makes it possible to treat the test value when performing the determination of abnormality as the substantially same value, and therefore, it is not necessary to synchronize timings for computing the computation values MTESTn and STESTn and for evaluating these values.

In this case, by using a value obtained from the A/D conversion for the test values MTEST and STEST, it is possible to reduce errors of the test values MTEST and STEST between the main CPU 11 and the sub-CPU 12. Furthermore, when determining an operation failure, a difference between the test values MTEST and STEST obtained by an inverse computing process on the received computation values MTESTn and STESTn and the test values MTEST and STEST obtained by itself is obtained, and if the difference is equal to or smaller than a predetermined value, it is determined that the operation is normal, and therefore, a tolerance in variation of the data acquired as the test values MTEST and STEST is increased.

Furthermore, by using a value obtained by A/D converting the battery voltage as the test values MTEST and STEST, it is possible to perform a check of the A/D conversion function of the CPUs 11 and 12 at the same time. Moreover, it is also possible to check whether the battery voltage is supplied to the CPUs 11 and 12 in a stable manner. It is because a determination of an operation failure is made in either the CPU 11 or 12 even when the A/D conversion cannot be performed normally or when the variation of the battery voltage is not stabilized.

The test values MTEST and STEST can be data having small variation amount per unit time, for example, a temperature of a coolant of an engine or an ambient temperature. The computing process can be performed by software or by logical circuits. The first CPU can be used as the sub-CPU and the second CPU can be used as the main CPU that performs a control of an actuator. The number of CPUs for performing mutual monitoring can be equal to or larger than three, in which one of the CPUs can make a determination of abnormality for the rest of them. The electronic control unit 1 can be an electronic control unit for other types of moving bodies such as a vehicle, an electric car, or an outboard motor, as long as it is a control unit for driving an actuator of a moving body.

## Claims

1. An electronic control unit (1) for a moving body, the electronic control unit (1) comprising:
a first CPU (Central Processing Unit: 11); and
a second CPU (12), wherein
each of the first and second CPUs is configured to monitor an operation of the other one of the first and second CPUs, and wherein
each of the first CPU and the second CPU is provided with:
a test value acquiring unit (31, 41) configured to acquire a test value;
a test computing unit (32, 42) configured to perform a computing process by using the test value and a common value to calculate a computation value; and
a comparing unit (33, 43) configured to perform an inverse computation of the computation value calculated by the other one of the first and second CPUs by using the common value, and to compare a result of the inverse computation with the test value of the one of the first and second CPUs to determine an operation of the other one of the first and second CPUs, wherein
the test value acquiring unit (31) of the first CPU (11) is configured to acquire a code indicating a result of a self-diagnosis on a core of the first CPU (11) as the test value, and the test value acquiring unit (41) of the second CPU (12) is configured to acquire a code indicating a result of a self-diagnosis on a core of the second CPU (12) as the test value, and
the test computing units (32, 42) of the first CPU (11) and second CPU (12) are configured to calculate the computation value while changing the computing process in a sequential manner every predetermined times.

2. The electronic control unit (1) for a moving body according to claim 1, wherein the test value acquiring unit (31) of the first CPU (11) is configured to write a predetermined value in a general-purpose register of the first CPU (11), read out the predetermined value from the general-purpose register, and then acquire a code of a result obtained by comparing a read value with the predetermined value as the test value, and the test value acquiring unit (41) of the second CPU (12) is configured to write a predetermined value in a general-purpose register of the second CPU (12), read out the predetermined value from the general-purpose register, and then acquire a code of a result obtained by comparing a read value with the predetermined value as the test value.

3. The electronic control unit (1) for a moving body according to claim 1 or 2, wherein the common value is stored in each of the first and second CPUs (11, 12) in advance.

## Patentansprüche

1. Elektronische Steuereinheit (1) für einen sich bewegenden Körper, wobei die elektronische Steuereinheit (1) umfasst:
eine erste CPU (Zentralverarbeitungseinheit: 11); und
eine zweite CPU (12), wobei
jede der ersten und zweiten CPUs konfiguriert ist, um einen Betrieb der anderen der ersten und zweiten CPUs zu überwachen, und wobei
jede von der ersten CPU und der zweiten CPU versehen ist mit
einer Testwert-Erfassungseinheit (31, 41), die konfiguriert ist, um einen Testwert zu erfassen;
einer Testrecheneinheit (32, 42), die konfiguriert ist, einen Berechnungsprozess unter Verwendung des Testwerts und eines gemeinsamen Werts durchzuführen, um einen Berechnungswert zu berechnen; und
eine Vergleichseinheit (33, 43), die konfiguriert ist, eine inverse Berechnung des von der anderen der ersten und zweiten CPUs unter Verwendung des gemeinsamen Wertes berechneten Berechnungswertes durchzuführen und ein Ergebnis der inversen Berechnung mit dem Testwert der einen der ersten und zweiten CPUs zu vergleichen, um einen Betrieb der anderen der ersten und zweiten CPUs zu bestimmen, wobei
die Testwert-Erfassungseinheit (31) der ersten CPU (11) konfiguriert ist, einen Code zu erfassen, der ein Ergebnis einer Selbstdiagnose auf einem Kern der ersten CPU (11) als den Testwert anzeigt, und die Testwert-Erfassungseinheit (41) der zweiten CPU (12) konfiguriert ist, einen Code zu erfassen, der ein Ergebnis einer Selbstdiagnose auf einem Kern der zweiten CPU (12) als den Testwert anzeigt, und
die Testrecheneinheiten (32, 42) der ersten CPU (11) und der zweiten CPU (12) konfiguriert sind, den Berechnungswert zu berechnen, während der Rechenprozess in einer sequentiellen Weise zu allen vorbestimmten Zeiten geändert wird.

2. Elektronische Steuereinheit (1) für einen sich bewegenden Körper gemäß Anspruch 1, wobei die Testwert-Erfassungseinheit (31) der ersten CPU (11) konfiguriert ist, einen vorbestimmten Wert in ein Allgemeinzweckregister der ersten CPU (11) zu schreiben, den vorbestimmten Wert aus dem Allgemeinzweckregister auszulesen und dann einen Code eines Ergebnisses, das durch Vergleichen eines gelesenen Wertes mit dem vorbestimmten Wert erhalten wird, als den Testwert zu erfassen, und die Testwert-Erfassungseinheit (41) der zweiten CPU (12) konfiguriert ist, einen vorbestimmten Wert in ein Allgemeinzweckregister der zweiten CPU (12) zu schreiben, den vorbestimmten Wert aus dem Allgemeinzweckregister auszulesen und dann einen Code eines Ergebnisses, das durch Vergleichen eines gelesenen Wertes mit dem vorbestimmten Wert erhalten wurde, als den Testwert zu erfassen.

3. Elektronische Steuereinheit (1) für einen sich bewegenden Körper gemäß Anspruch 1 oder 2, wobei der gemeinsame Wert in jeder der ersten und zweiten CPUs (11, 12) im Voraus gespeichert wird.

## Revendications

1. Unité de commande électronique (1) pour un corps en mouvement, l'unité de commande électronique (1) comprenant :
une première CPU (unité centrale de traitement : 11) ; et
une seconde CPU (12), dans laquelle
chacune des première et seconde CPU est configurée pour surveiller une opération de l'autre des première et seconde CPU, et dans laquelle
chacune de la première CPU et de la seconde CPU est munie :
d'une unité d'acquisition de valeur de test (31, 41) configurée pour acquérir une valeur de test ;
d'une unité de chiffrage de test (32, 42) configurée pour réaliser un processus de chiffrage en utilisant la valeur de test et une valeur commune pour calculer une valeur de chiffrage ; et
d'une unité de comparaison (33, 43) configurée pour réaliser un chiffrage inverse de la valeur de chiffrage calculée par l'autre des première et seconde CPU en utilisant la valeur commune, et pour comparer un résultat du chiffrage inverse avec la valeur de test de l'une des première et seconde CPU pour déterminer une opération de l'autre des première et seconde CPU, dans laquelle
l'unité d'acquisition de valeur de test (31) de la première CPU (11) est configurée pour acquérir un code indiquant le résultat d'un autodiagnostic sur un cœur de la première CPU (11) comme étant la valeur de test, et l'unité d'acquisition de valeur de test (41) de la seconde CPU (12) est configurée pour acquérir un code indiquant le résultat d'un autodiagnostic sur un cœur de la seconde CPU (12) comme étant la valeur de test, et
les unités de chiffrage de test (32, 42) des première CPU (11) et seconde CPU (12) sont configurées pour calculer la valeur de chiffrage tout en modifiant le processus de chiffrage d'une manière séquentielle à chacun d'instants prédéterminés.

2. Unité de commande électronique (1) pour un corps en mouvement selon la revendication 1, dans laquelle l'unité d'acquisition de valeur de test (31) de la première CPU (11) est configurée pour écrire une valeur prédéterminée dans un registre à usage général de la première CPU (11), lire la valeur prédéterminée à partir du registre à usage général, et acquérir ensuite un code d'un résultat obtenu par la comparaison d'une valeur lue avec la valeur prédéterminée comme étant la valeur de test, et l'unité d'acquisition de valeur de test (41) de la seconde CPU (12) est configurée pour écrire une valeur prédéterminée dans un registre à usage général de la seconde CPU (12), lire la valeur prédéterminée à partir du registre à usage général, et acquérir ensuite un code d'un résultat obtenu par la comparaison d'une valeur lue avec la valeur prédéterminée comme étant la valeur de test.

3. Unité de commande électronique (1) pour un corps en mouvement selon la revendication 1 ou 2, dans laquelle la valeur commune est stockée dans chacune des première et seconde CPU (11, 12) à l'avance.
